(19) Europäisches Patentamt
European Patent Office
Office européen des brevets

(11) **EP 2 991 861 B1**

(12) **EUROPEAN PATENT SPECIFICATION**

(45) Date of publication and mention
of the grant of the patent:
**07.11.2018 Bulletin 2018/45**

(21) Application number: **14721955.4**

(22) Date of filing: **02.05.2014**

(51) Int Cl.:
**B60R 21/0132** *(2006.01)*

(86) International application number:
**PCT/GB2014/051383**

(87) International publication number:
**WO 2014/177891 (06.11.2014 Gazette 2014/45)**

(54) **METHOD, APPARATUS AND COMPUTER PROGRAM FOR DETECTING A COLLISION USING ACCELEROMETER DATA**

VERFAHREN, VORRICHTUNG UND COMPUTERPROGRAMM ZUR KOLLISIONSERKENNUNG MITHILFE VON BESCHLEUNIGUNGSMESSERDATEN

PROCÉDÉ, APPAREIL ET PROGRAMME INFORMATIQUE DE DÉTECTION D'UNE COLLISION À L'AIDE DE DONNÉES D'ACCÉLÉROMÈTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.05.2013 GB 201307980**

(43) Date of publication of application:
**09.03.2016 Bulletin 2016/10**

(73) Proprietor: **Redtail Telematics Limited**
**Great Chesterford Essex CB10 1NY (GB)**

(72) Inventors:
• **DEBENHAM, Peter**
**Burwell**
**Cambridgeshire CB25 0RS (GB)**
• **MASSAM, Peter**
**Saffron Walden**
**Essex CB11 3EJ (GB)**

• **ALLEN, Tony**
**Great Chesterford,**
**Essex CB10 1NY (GB)**

(74) Representative: **EIP**
**EIP Europe LLP**
**Fairfax House**
**15 Fulwood Place**
**London WC1V 6HU (GB)**

(56) References cited:
| | |
|---|---|
| EP-A2- 1 293 399 | US-A- 5 339 242 |
| US-A- 5 436 838 | US-A- 5 530 649 |
| US-A- 5 758 301 | US-A- 6 076 028 |
| US-A1- 2003 182 041 | US-B1- 6 970 778 |
| US-B2- 7 729 829 | |

**Description**

Technical Field

The present invention relates to a method, apparatus and a computer program for determining whether a vehicle collision has occurred using accelerometer data.

Background

It is known to monitor the acceleration of a vehicle using an accelerometer. This measurement can be used for a variety of purposes. For example, it can be used as an input to decide whether to trigger an airbag.

US-5,436,838 discusses crash/non-crash discrimination using an accelerometer. A system is discussed in which an accelerometer output is integrated and compared to a threshold value; when the threshold value is exceeded a restraint system (such as an airbag) is operated. US-5,436,838 notes that such a system is not good at discrimination between driving on rough roads and pole crashes and goes on to discuss a system in which an accelerometer signal is integrated to form a velocity signal and in which frequency components of the accelerometer signal that appear uniquely in a vehicle crash are extracted and squared to produce an impact energy signal. A decision to operate a restraint system is made considering both the velocity signal and the impact energy signal. The threshold values are calculated from recorded crash data.

A monitoring apparatus for attachment to a vehicle to monitor a vehicle is also known. The monitoring apparatus can include or receive data from an accelerometer.

US-6,790,778 B1 relates to a passenger restraint system for a motor vehicle. The restraint system is triggered if the sum of integrated acceleration signals weighted with a weighting coefficient exceeds a defined minimum sum.

Summary

According to an aspect of the invention, there is provided a method of detecting a collision using an accelerometer attached to a vehicle as defined in appended claim 1.

In another aspect, there is provided an apparatus for attachment to a vehicle as defined in appended claim 13. In a further aspect, there is provided a computer program as defined in appended claim 15.

Further features and advantages of the invention will become apparent from the following description of preferred embodiments of the invention, given by way of example only, which is made with reference to the accompanying drawings.

Brief Description of the Drawings

Figure 1 shows a diagrammatic representation of a schematic diagram of an example of a monitoring apparatus for attachment to a vehicle;

Figure 2 is a flow chart of an example of a method of determining whether a collision has occurred according to one embodiment of the invention;

Figure 3 depicts example acceleration data and relative thresholds for a car travelling at 137 km per hour (85 miles per hour) and involved in a collision; and

Figure 4 depicts example acceleration data and relative thresholds for a motorbike travelling at 89 km per hour (55 miles per hour) and not involved in a collision.

Detailed Description

According to a first embodiment, there is provided a method of detecting a collision using an accelerometer attached to a vehicle. The method comprises:

receiving acceleration data from the accelerometer at discrete intervals;
summing the acceleration data over a time period to produce an accumulated acceleration;
determining whether a collision has occurred based at least in part on a comparison of at least one of the accumulated acceleration and a function of the accumulated acceleration to a threshold;
counting the number of points of acceleration data within the time period which exceed a second threshold to produce a count; and
the determining whether a collision has occurred is further based at least in part on the count.

This enables a collision to be determined in a relatively simple manner. The calculations may be integer operations. This makes the method suitable for devices with limited processing power and/or allows the method to be repeated over different time periods and/or threshold values without a significant delay. In comparison to the methods of US-5,436,838, the calculation is simpler because no integration is required. The method may happen continually, for example working on a moving window of available acceleration data, or may occur responsive to another event, for example when the acceleration data has a vector magnitude above a certain level or one or more component magnitudes above a certain level to determine if the increase in magnitude is indicative that a collision has occurred.

The determining whether a collision has occurred is further based at least in part on the count. This can improve detection of low-speed collisions. The second threshold can be an absolute threshold or a relative threshold and some embodiments may use counts of both absolute and relative thresholds.

The acceleration data may be received at substantially constant time intervals, for example a constant sampling frequency. This will depend on the rate at which the accelerometer can output data. Example frequencies include about 100Hz, and about 1kHz. The invention is not limited to these frequencies, however. The choice of sampling frequency will depend on the processing power and memory resources available, as well as cost and capability of the accelerometer. In general a higher sampling frequency allows more reliable detection.

The summing the acceleration data may use a plurality of consecutive acceleration measurements over the time period. The time period may be chosen dependent on the time scale of the event to be detected. Example time periods include 50ms, 100ms, 250ms, 500ms or longer.

The first threshold may be determined by considering an energy change over the time period likely to cause injury to a vehicle occupant or damage to the vehicle. The first threshold may be predetermined. Considering an energy change may give a good indicator of a severity of a collision for use in the threshold, and may allow discrimination between collisions resulting in injury or damage and impulses resulting from driving conditions such as hitting a pot hole. It has been found that the accumulation of acceleration is a good indication of the energy change over the time period. Thus, the method can be used for any event in which an energy change over a particular time is known or can be calculated. The first threshold can therefore be calculated without requiring actual crash data for a particular vehicle, only knowledge of the energy change, although in some embodiments actual crash data may be used to inform the energy change used to calculate the threshold.

The accelerometer may be attached within a passenger compartment of the vehicle and the first threshold is then determined by considering an energy change over the time period likely to cause injury to a vehicle occupant. By considering energy changes likely to cause injury, a vehicle-independent measurement can be determined. The accelerometer is within the passenger compartment and thus experiences acceleration from the point of view of the vehicle occupant. For example, the energy change can be considered using medical data of impacts likely to cause injury, and using the typical mass of an adult or child to estimate the energy change. This allows the severity of the collision detected to be varied depending on the requirements of a particular application.

The method may be particularly simplified when the first threshold is calculated using the square root of an energy change over the time period likely to cause injury to a vehicle occupant or damage to a vehicle.

In some embodiments, the acceleration data is a vector in two or more axes and the summing the acceleration data uses a magnitude of the vector. In other embodiments the acceleration data is a vector in two or more axes and the summing the acceleration data uses the acceleration along one of the two or more axes. The two or more axes can correspond to the raw output of an accelerometer or correspond to the axes in a frame of reference of the vehicle. Considering acceleration along one axis may be beneficial when the axis is oriented with a vehicle axis. For example it can allow only head-on collisions or only side-on collisions to be detected.

The received acceleration data may be amended by subtracting an average of the acceleration data. The amended acceleration data may then be used in the summing. This enables the current road conditions to be taken into account, for example to accommodate rough road surfaces or inclines. The average may be the arithmetic mean and the amendment may be applied before the summing of acceleration data. The average may be taken over any suitable period, examples including between 2 and 60 seconds preceding the acceleration data, 60 seconds or less, between 10-20 seconds, between 14-18 seconds and about 16 seconds.

In some embodiments the acceleration data to be summed are stored in a First In First Out (FIFO) buffer with a size corresponding to the number of acceleration samples in the time period. One example of a FIFO buffer is a circular buffer. This allows the latest acceleration sample to be added to the buffer in a computationally efficient way.

The method may comprise summing the acceleration data over a second time period to produce a second accumulated acceleration, the second time period at least partially overlapping with the time period; and wherein the determining whether a collision has occurred is further based at least in part on a comparison of the second accumulated acceleration with the first threshold. The use of a second accumulated acceleration in this way can enable better detection of events at close to the boundaries of the time period.

In addition to the comparison of the accumulated acceleration with the first threshold, further factors can be included in the determination whether a collision has occurred.

In some embodiments, the determining whether a collision has occurred is based at least in part on a determination whether the vehicle is stationary having previously been in motion. For example this determination could be derived by integrating the acceleration measurements, from a speed measurement, from a satellite positioning system or directly from speed data provided by the vehicle itself, such as speed data broadcast over a CANBus.

In some embodiments, the determining whether a collision has occurred is based at least in part on a change in static linear acceleration relative to an average static linear acceleration.

In some embodiments, the determining whether a collision has occurred is based at least in part on determining a measured Earth vector and comparing the measured Earth vector to a previously determined Earth vector. For example, the Earth vector can be determined from the accelerometer measurements by determining the direction of acceleration due to gravity.

In some embodiments, the determining whether a collision has occurred is based at least in part on a determination of the direction of the measured acceleration relative to a frame of reference of the vehicle. For example, accelerations in the vehicle sideways or forward directions can be considered, but not downward accelerations. This can avoid false positive detection of vertical impacts which may occur on rough roads or pot holes, for example.

In some embodiments, in the summing the acceleration data, only acceleration data which exceeds a third threshold is used. The third threshold can be an absolute value or a relative value, where a relative value is determined based on the values of at least some of the acceleration data. Using a third threshold to filter the acceleration data in this way can increase accuracy with acceleration data gathered at a relatively low sample rate. In some embodiments sums for both absolute and relative values may be used. The third threshold may be the same as the second threshold.

According to another embodiment, there is provided an apparatus for attachment to a vehicle. The apparatus comprises a processing system. The processing system is configured to:

receive the acceleration data at discrete intervals;
sum the received acceleration data over a time period to produce an accumulated acceleration; and
determine whether a collision has occurred based at least in part on a comparison of at least one of the accumulated acceleration and a function of the accumulated acceleration to a first threshold.

The threshold may be determined by considering an energy change over the time period likely to cause injury to a vehicle occupant or damage to the vehicle.

The acceleration data may be from an accelerometer attached within a passenger compartment of the vehicle in use and the threshold may be determined by considering an energy change over the time period likely to cause injury to a vehicle occupant. The accelerometer may be external to the apparatus or included within the apparatus. If the accelerometer is included within the apparatus then the apparatus may be attached within a passenger compartment of the vehicle in use.

The first threshold may be the square root of an energy change over the time period likely to cause injury to a vehicle occupant or damage to the vehicle.

The accelerometer data may be a vector in two or more axes and the processing system can be configured to use a magnitude of the vector in the sum of the acceleration data.

The acceleration data may be a vector in two or more axes and the processing system can be configured to use the acceleration along one of the two or more axes in the accumulated acceleration.

The processing system may be configured to amend the received acceleration data by subtracting an average of the measured acceleration, and to use the amended acceleration data in the sum. The processing system can configured to calculate the average of the acceleration data over a time of between 2 and 60 seconds preceding the accumulated acceleration.

In some embodiments, the apparatus may comprise a First In First Out buffer with a size corresponding to the number of acceleration samples in the time period.

The processing system may be configured to:

sum the acceleration data over a second time period to produce a second accumulated acceleration, the second time period at least partially overlaps with the time period; and
determine whether a collision has occurred based at least in part on a comparison of the second accumulated acceleration with the first threshold.

The processing system may be configured to determine whether a collision has occurred based at least in part on a determination whether the vehicle is stationary having previously been in motion.

The processing system may be configured to determine whether a collision has occurred based at least in part on a change in static linear acceleration relative to an average static linear acceleration.

The processing system may be configured to determine whether a collision has occurred based at least in part on determining a measured Earth vector and comparing the measured Earth vector to a previously determined Earth vector.

The processing system may be configured to determine whether a collision has occurred based at least in part on a determination of the direction of the measured acceleration relative to a frame of reference of the vehicle.

In another embodiment of the invention, there is provided a vehicle having an apparatus as discussed above attached to it. The vehicle may comprise an accelerometer attached within a passenger compartment of the vehicle.

The processing system described above may comprise at least one processor and a memory storing a set of computer instructions.

There may be provided a non-transitory computer-readable storage medium storing a computer program as described above.

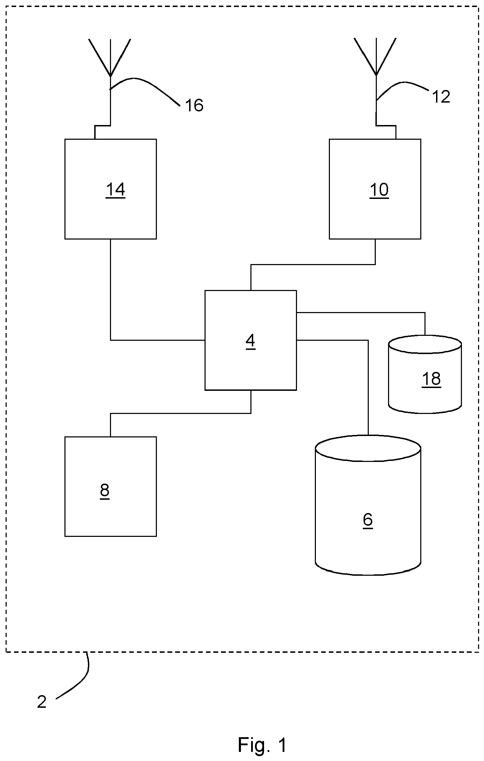

Referring now to the drawings, Figure 1 shows a diagrammatic representation of a schematic diagram of an example of a monitoring apparatus in which embodiments of the present invention can be implemented.

The monitoring apparatus 2 of Figure 1 comprises a processor 4, storage 6, accelerometer 8, satellite positioning receiver 10, satellite positioning antenna 12, wireless communication system 14, wireless communication antenna 16 and RAM 18.

Processor 4 can be any device able capable of executing instructions, for example a microprocessor, microcontroller or application-specific integrated circuit. The processor is connected to the storage 6, accelerometer 8, satellite positioning receiver 10, wireless communication system 14 and RAM 18 by respective interfaces, allowing the processor 4 to transfer data with the storage 6, accelerometer 8, satellite positioning receiver 10 and wireless communication system 14.

Storage 6 can be any non-volatile or persistent storage that retains data stored in it when no power is applied. Examples include one or more Flash memory devices and magnetic storage, such as one or more hard disk drives. Storage 6 stores computer-implementable instructions that can be read and executed by the processor 4. Storage 6 also stores configuration parameters and other information. In some embodiments the storage 6 can also be used to record data from the accelerometer and satellite positioning system.

The accelerometer 8 is an acceleration sensor that outputs instantaneous acceleration along at least one axis. In this embodiment the acceleration sensor is a three-axis acceleration sensor which outputs instantaneous acceleration along three, mutually orthogonal axes. In other embodiments acceleration in three axes can be provided by three separate acceleration sensors oriented orthogonally to each other. The accelerometer 8 provides the processor 4 with instantaneous acceleration measurements at a constant frequency. For example the accelerometer provides the processor 4 with acceleration measurements at a frequency of 100 Hz in some embodiments. In other embodiments an accelerometer can be provided which is external to the monitoring apparatus; in that case an acceleration data interface may be provided to the processor 4 to receive data from the external accelerometer.

Satellite positioning receiver 10 provides speed and heading to the processor 4 at a constant frequency. Any form of satellite positioning can be used, for example GPS, GLONASS or Galileo. In this embodiment the satellite positioning receiver receives positioning satellite signals via the antenna 12 and outputs signals corresponding to position, speed and heading data to the processor 4 at a frequency of 1Hz. In other embodiments the frequency at which this data is provided to the processor can be different, for example higher or lower than 1Hz. In other embodiments, the satellite positioning receiver 10 and internal positioning antenna 12 may be replaced with a positioning interface to the processor 4 which receives speed, position and heading data from an external source, such as an in-vehicle navigation system.

Wireless communication system 14 and its associated antenna 16 enable the processor to communicate wirelessly with other devices. For example, data from the accelerometer 8 and satellite positioning receiver 10 can be transmitted using the wireless communication system 14. Any suitable wireless communication system can be used. However, it is preferred to use a system with good geographical coverage. In this embodiment the wireless communication system 10 is a GSM communication system. It can transmit and/or receive data using wireless data connections and/or SMS messages, depending on the volume and type of data required to be transmitted. Other embodiments can use other types of wireless communication systems, for example ones following standards defined by 3GPP, such as so called 3G, Long Term Evolution or Long Term Evolution-Advanced. Other embodiments can use CDMA, Satellite communication, VHF radios and other wireless communication systems.

In normal operation, the processor 4 receives accelerometer data from accelerometer 8 at 100Hz and speed and heading data from the satellite positioning system 10 at 1Hz. In other embodiments the acceleration data and speed and heading data can be received at different rates, for example at higher rates. This data is stored in a buffer in RAM 18 or storage 6 until the buffer is full. When the buffer is full the data is transmitted using the wireless transmission system 14 for external storage and processing.

Some embodiments reduce the volume of data for transmission and storage by not recording all the data provided to the processor. For example, the accelerometer can be recorded at a rate of 10Hz. In such embodiments the data can be reduced in any suitable way. For example some data can simply be discarded or an average of several values stored. Other embodiments can record data at different rates.

It would be desirable to use the data produced by the monitoring apparatus 2 to detect high impact events or collisions affecting the vehicle to which the monitoring apparatus is attached. Various options are available when a collision is detected. In one embodiment detection of a collision allows black box recording surrounding the collision, thus allowing the circumstances leading up to and through the collision to be reconstructed. In another embodiment, collisions can be reported automatically to a server through the wireless communication system 14. The server may then provide notification to for example an insurer or vehicle owner even in the absence of a report being made by the vehicle user.

In some embodiments emergency services may be notified automatically, either by the server or the monitoring apparatus itself. As will be discussed below, embodiments of the invention allow many criteria to be monitored to detect collisions; a distinction can be made between the severity of a detected collision and any notification to be undertaken as a result. As with all such reporting there is a balance to be struck between false positives (where normal driving events are identified as possible collisions, such as driving over cattle grids or potholes) and false negatives (failing to detect a real collision event). Some embodiments of the invention allow the detection criteria to be varied depending on the requirements of a particular application.

The theory underlying certain examples of embodiments of the invention will now be explained. In the following discussion the x-axis is forwards along the vehicle, the y-axis is sideways relative to the vehicle's normal direction of travel and the z-axis is away from the Earth (in the upwards direction, although the z axis can also be towards the Earth in the downwards direction) with the normal value of z being of magnitude 1g. It is assumed that the accelerometer is sufficiently well calibrated that no additional calibration of the accelerometer is required. Embodiments of the invention are well suited to implementation in devices with limited resources and processing power. For example the monitoring apparatus may have relatively little RAM and/or processing power. However, some embodiments of the invention may be implemented in real time by a monitoring apparatus with relatively low resources.

Depending on the particular monitoring apparatus 2, different data may be available to the processor 4. For example, acceleration data may not be stored at the full rate at which it is generated due to memory or data storage constraints. In some embodiments, the monitoring apparatus 2 knows the average acceleration measured on each accelerometer axis. This average acceleration is "long term" when compared to the period between individual samples. For example, in one example embodiment, the monitoring apparatus 2 can hold an average of the last 16 seconds of acceleration data.

In some embodiments the monitoring apparatus may know its orientation relative to the vehicle in which it is installed. Orientation can be known by installing the monitoring apparatus in a specific orientation or by determining the orientation after installation. Various methods for determining orientation after installation can be used and can be carried out locally or remotely. For example, the monitoring apparatus can store a set of unit vectors that may be used to transform the accelerometer data into the vehicle axes so that acceleration is expressed in the frame of reference of the vehicle. An example method for determining orientation after installation first uses accelerometer data to determine a downwards direction. Periods of straight acceleration are then identified using speed and heading data, for example from a satellite positioning receiver. Acceleration data corresponding to a straight acceleration is then selected and subjected to principal component analysis to determine the vehicle forward direction. Finally a cross product of the downwards and forwards direction is used to calculate a sideways direction. More examples of methods to calculate the orientation are given in our co-pending PCT Application No. PCT/GB2014/051379 entitled "Method, System and Computer Program for Determining the Orientation of an Apparatus".

Although embodiments are well suited to limited resource environments, the methods can also be used with more powerful hardware, for example accelerometers generating data at higher sample rates (e.g. 1 kHz and above) and possibly with additional sensing range (for example $\pm 16g$) and more memory. The general principles of collision detection will remain the same but a more complex detection may be possible with the additional resources available.

Embodiments of the invention consider collisions from the point of view of the energy change experienced during the collision or a part of the collision. This may be for example the kinetic energy change experienced by the occupant or the vehicle rather than (or in addition to) the peak acceleration seen.

It is known that kinetic energy $E = \frac{1}{2}m.v^2$ where v is a 3 dimensional vector $(v_x, v_y, v_z)$ of velocity. Following any change of velocity, the change in kinetic energy is therefore:

$$\Delta E = \frac{1}{2}m.(v_{end}^2 - v_{start}^2) \quad (1)$$

Although speed data (as a magnitude of the velocity) is available to the monitoring apparatus, it may only be available at a relatively slow rate, for example as little as once per second when using a satellite positioning system. In general, an accelerometer can provide data a higher rate than a positioning system. Embodiments of the invention use accelerometer data.

Formally:

$$\Delta v = (v_{end} - v_{start}) = \int_0^t a(t).dt$$

With discrete measurements of acceleration a at intervals of $\Delta t$ this becomes:

$$\Delta v = \sum_{i=0}^{t} a_i.\Delta t \qquad (2)$$

Given knowledge of $v_{start}$, Equation (2) allows $v_{end}$ to be calculated and Equation (1) to be solved. It is possible to use the speed data available to the monitoring apparatus for this. For example a satellite positioning system may output velocity data once a second. Pre-impact this is relatively steady, allowing it to be used as a good measure for $v_{start}$. However, a simplification is possible if starting or ending velocity can be assumed to be zero.

A simplification when the starting velocity is known to be zero will now be described. When it is known that $v_{start}$ is 0 then Equation (1) above reduces to

$$\Delta E = \frac{1}{2}m.(v_{end}^2)$$

or alternatively

$$\Delta E = \frac{1}{2}m.\Delta v^2 \qquad (3)$$

thus, from Equation (2)

$$\Delta E_t = \frac{1}{2}m.\left(\sum_{i=0}^{t} a_i.\Delta t\right)^2$$

$\Delta t$ is fixed across the calculations so can be brought outside the sum:

$$\Delta E_t = \frac{1}{2}m.\Delta t^2.\left(\sum_{i=0}^{t} a_i\right)^2 \qquad (4)$$

Equation (4) therefore allows a collision to be detected if $\Delta E_t$ is above a given threshold. The same simplification applies if alternatively $v_{end}$ is 0 except for a minus sign. In practice, this is irrelevant because it is the magnitude of the energy change that matters and not its sign. Thus, a collision is determined to be detected if $|\Delta E_t|$ is above a given threshold.

The acceleration data taken direct from the accelerometer includes the acceleration due to gravity. In addition, zero-g offsets may be present if for example the accelerometer is a Microelectromechanical system (MeMs) accelerometer. The accuracy of collision detection can be improved if the acceleration due to gravity and the zero-g offsets are removed. One way to account for gravity is to remove a long-term average acceleration, in embodiments in which long term acceleration is available. Thus

$$a_i = \left(a_x - \overline{a_x}, a_y - \overline{a_y}, a_z - \overline{a_z}\right) \qquad (5)$$

at any particular moment t (where $\bar{a}$ = the long term average acceleration). A further benefit is that this can account for current road conditions, for example an incline in the road.

Accelerations read from the accelerometer data can be scaled from units of g where 1g = 9.81 ms$^{-2}$.

In other embodiments, if the acceleration data is expressed in terms of vehicle data, one way of accounting for gravity is to use only the components of acceleration in the vehicle forwards direction and the vehicle sideways direction.

Embodiments of the invention provide a method of determining whether a collision has occurred using accelerometer data. It will now be shown how the method can be further simplified in some embodiments by determining an appropriate threshold value. First, the value of $\Delta Et$ is found. A first option to do this is to consider the energy change in the vehicle. A second option to do this is to consider the energy change seen by the vehicle passenger or passengers.

From the point of view of assessing the severity of a collision, either the first or the second option is useful. However, the accelerometer used by the monitoring apparatus is typically fitted inside the protected passenger compartment of the vehicle, and thus often isolated from the most severe forces seen by the vehicle's extremities. Instead, the accelerometer experiences forces which correspond with those experienced by vehicle passengers. Thus, the second option will be developed further as an example of the use of energy changes in collision detection from accelerometer signals. The invention is not limited to this and it will be appreciated that other energy changes can be considered.

In this example, the mass value in equation (4) above is therefore that of an individual passenger or part of a passenger that may be injured. Considering the mass of the passenger has a further advantage: it is independent of the mass of the vehicle. The variation in mass of different vehicle types is larger than the variation in mass of passengers. For example, the vehicle may have the mass of a small city car (e.g. around 800kg unladen) up to a mass of a laden 7.5 tonne truck (e.g. a mass of greater than 8000kg) or more. Thus the variation in vehicle mass in which embodiments of the present invention may be used can be as high as a factor of ten or more. In comparison, the mass of a normal adult (around 70kg) or that of a human head (around 4.5kg for adults, 1.5kg for children) can be used. Although different people have different weights, the variability in human weight is much smaller than that of vehicles especially when considering a normal or typical adult say.

Another advantage is that there is medical evidence arguing that, especially in the case of head injuries, kinetic energy changes matter more than peak deceleration does (for example see Archives of Disease in Childhood 1997; 76:393-397 Head injury - abuse or accident, Wilkins, hereinafter referred to as "Wilkins").

Making the simplifications to arrive at equation (4) required that $v_{start}$ or $v_{end}$ is 0. In a serious collision it is likely that the vehicle will come to a complete halt. However, there will be less severe collisions where the vehicle continues to move and situations where there is a long tail or sequence of movement before the vehicle comes to rest. These situations can be accounted for more easily when the energy is considered from the point of view of an occupant of the vehicle and who remains inside the vehicle for the duration of the impact event or collision. The vehicle in which the passenger is travelling is an inertial reference frame and it is the forces, impulse and kinetic energy change seen by the passenger relative to this reference frame which matters from the point of view of injury or damage. When the accelerometer is mounted inside the passenger compartment, it will measure acceleration in this reference frame. (The accelerations will still be relative to the vehicle reference frame even if the accelerometer data is not oriented to the vehicle axes).

Prior to the start of a collision the occupant is not moving relative to the vehicle. The velocity, $v_{start}$, relative to the vehicle reference frame is 0, allowing the simplifications that resulted in equation (4) above. (It should be noted that the same consideration can apply to the vehicle as a whole in embodiments where damage to the vehicle is being considered.)

An example calculation of a value for $\Delta E_t$ will now be given. This starts with equation (4):

$$\Delta E_t = \frac{1}{2} m . \Delta t^2 . \left( \sum_{i=0}^{t} a_i \right)^2 \quad (4)$$

For any particular situation $m$ is a fixed scaling factor so can be set to 2 to simplify calculations. The real mass may then be allowed for in the energy threshold value. Similarly, $\Delta t$ is a fixed value so can be set to 1 for simplicity. As with $m$, the real value of $\Delta t$ (0.01s for 100 Hz accelerometer data) may be allowed for in the final energy threshold value.

Finally in equation (4) $a_i$ is in ms$^{-2}$. In reality $a_i$ as expressed in the accelerometer data is scaled. Again this scaling value is fixed and becomes another fixed multiplication factor outside the sum which may be allowed for in the energy threshold value. Thus, using these assumptions, equation (4) simplifies to

$$\Delta E_t = \left( \sum_{i=0}^{t} a_i \right)^2 \quad (6)$$

where $a_i$ is calculated using from equation (5) (correcting for the average acceleration).

In the method of this embodiment, the relevant factor is whether or not the magnitude of the energy change is above a given pre-decided threshold value. This allows a further simplification by taking the square root of (6).

$$Threshold = \sqrt{\Delta E_t}$$

$$= \sum_{i=0}^{t} a_i \qquad (7)$$

The threshold $\sqrt{\Delta E_t}$ is pre-calculated using appropriate values. Note here that because $a_i$ is no longer squared the modulus should be considered to avoid the effect of possible negative value.

The method of this embodiment therefore allows collisions to be detected in a computationally efficient way. The calculation is preferably run in real-time over any time-period subject to sufficient RAM or other memory to store the acceleration time series. For example, some embodiments may use a sliding window, recalculating the sum of accelerations each time new acceleration data is received.

Available RAM or other memory and processing resources may be limited in some embodiments, so a sliding window is not possible. In these embodiments various strategies can be used.

In a first example limited resource strategy, $\Delta E_t$ is continuously calculated, but over a shorter time-period t within the limits of the available RAM or other memory. This in general may miss events occurring over a longer time-scale.

In a second example limited resource strategy, a successive series of $\Delta E_t$ values for longer time-periods t (for example t=250ms) can be calculated. This gives improved detection of collisions occurring over a longer time-scale but at the cost of possibly missing events occurring across boundaries. This disadvantage may be reduced in some embodiments by calculating sets of $\Delta E_t$ at intervals $\Delta T$ with each new $\Delta E_t$ calculation starting offset from the previous by a time which is under the period of the calculation t. For example: calculate $\Delta E_{t=250ms}(0ms)$, $\Delta E_{t=250ms}(50ms)$ and $\Delta E_{t=250ms}(100ms)$ where $\Delta E_{t=250ms}(T)$ means the kinetic energy change seen over a 250ms period starting at time T.

Some embodiments can use parameter blocks to allow a general calculation in the monitoring apparatus to be tuned with particular values of $t$ and $\Delta T$.

In embodiments where the orientation of the accelerometer data to the vehicle axes is known, per axis values of $\Delta E_t$ can be calculated each with their own threshold. Such embodiments could account for an impact in a particular direction requiring less energy to cause injury.

An example of determining a suitable value of $\Delta E_t$ will now be described. This example considers the risk of head injury to a small child. Adults are generally less susceptible to such injuries so risk of injury to a small child is likely to result in a lower threshold than would be applicable for an adult. Other embodiments may use energy considerations specific to their application. For example a consideration from the point of view of an adult may be more appropriate for a commercial vehicle in which occupants are only likely to be adults.

According to Wilkins, head injury in children only rarely occurs in falls of under 1.5m. In this example the change in kinetic energy involved in a head falling from 1.5m onto concrete will be used to determine a threshold over which injury is likely to result. Thus: height of fall =1.5m, mass of child head = 1.5kg and velocity before fall = 0 ms$^{-1}$. Velocity immediately before impact can be calculated by combining the standard equations

$$s = \frac{1}{2} a . t^2$$

and

$$v = a . t$$

giving

$$v = \sqrt{2as}$$

The kinetic energy of the head immediately before impact is the change of energy seen during impact

$$\Delta E = \frac{1}{2} m. v^2 = \frac{1}{2} m. 2as = m.a.s$$

Thus, in the example where $m$=1.5kg, $a$=$g$=9.81 ms$^{-2}$, $s$=1.5m:

$$\Delta E = 22\, Joule$$

The timescale over which this energy change occurs also needs to be estimated. Very high impact events are over quickly, typically in the order of milliseconds to tens of milliseconds. Therefore, in this example, $\Delta E$ is calculated over 50ms in the first instance, and collision is determined to have taken place if the change of energy is greater than 22J over this period.

In this example, acceleration data is received as 100Hz samples (each sample covers 10 ms) so five samples equate to 50 ms. The required five samples are collected in a FIFO buffer, for example a circular buffer containing 5 stored instantaneous values of $a_i$.

Following equation (7):

$$Threshold_{50ms} = \sqrt{\Delta E_{50ms}}$$

$$= \sum_{i=0}^{4} a_i \qquad (8)$$

To minimise the processing required, the energy threshold of 22J can be pre-scaled to give a threshold allowing the monitoring apparatus real time calculations to be performed solely as integer arithmetic in the internal storage units of acceleration $a$. For example, the scaling can be $\sqrt{\dfrac{2}{m*\Delta t^2}}$ if $a_i$ is in ms$^{-2}$. In some embodiments, the acceleration data may be in any arbitrary unit. For example, $a_i$ may be expressed in units where 1g=256. In that case an additional scaling factor of $\sqrt{\dfrac{256}{9.81}}$ may be applied to the energy threshold. In other embodiments with different values used for the energy threshold calculation and/or different accelerometer units, these scaling values are adjusted as appropriate.

Further embodiments may determine whether a collision has occurred using different factors in the energy change determination to arrive at the threshold. All that is required is to determine the relevant energy change. The principle remains the same but with different energy thresholds and different calculation periods depending on the duration of the event.

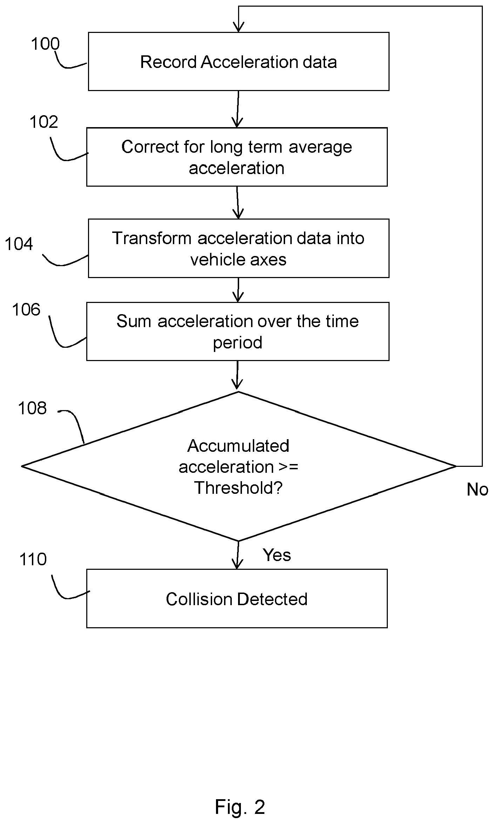

Having considered some specific examples, the general method of the invention will now be described with reference to Figure 2. First, at step 100, acceleration data is recorded; for example acceleration data can be received from an internal or external accelerometer. Next, at step 102, the received acceleration data is corrected for the long term average acceleration, for example the average acceleration over the last 16 seconds. This can use equation (5) in one embodiment. Some embodiments can omit step 102.

Next, at step 104, the acceleration can be transformed into vehicle axes. Some embodiments may reverse the order of step 102 and 104. Other embodiments may omit step 104, for example if orientation data is not known.

Execution then proceeds to step 106, where a sum of the corrected and oriented acceleration data over the time period in question is calculated. In some embodiments this can consider the magnitude of the vector, whereas in other embodiments a particular axis or axes may be considered. In the example above the time period is 50 ms. This gives the accumulated acceleration which is then compared to the pre-determined threshold in step 108. If the accumulated acceleration is greater than the threshold a collision is determined as having taken place at step 110. This may then be reported to a server or an emergency service, or trigger storage of values in storage 6 for subsequent analysis. Otherwise, if the accumulated acceleration is less than the threshold at step 108, execution returns to step 100 to continue monitoring for collisions.

Some embodiments may implement this method against multiple criteria and time windows, for example determining a relatively minor collision using a first threshold and first time period while also determining more severe collisions using a second threshold and second time period. In embodiments with automatic reporting some, and not all, of the criteria may result in an automatic report to an emergency service or server or the like.

Further embodiments may use the method described above in combination with other factors to determine a collision, so that a determination is not solely based on the energy change method discussed above. Additional factors to consider include overall linear acceleration changes and speed.

When other factors are considered, example embodiments may determine a collision has occurred when:

1) $\Delta E_t$ is above a first threshold; or

2) $\Delta E_t$ is above a second threshold, lower than the first threshold, AND the vehicle has stopped moving having previously been in motion; or

3) $\Delta E_t$ is above a third threshold, lower than the first threshold and possibly the same as the second threshold, AND the vehicle orientation as measured by static linear acceleration is now significantly changed from the long-term average acceleration observed prior to the event. This may signal that the vehicle has tipped.

One example of how to determine this change in static linear acceleration is to, on a per-axis per-sample basis, determine whether or not the current instantaneous acceleration is more than <a> away from the long term average acceleration for that axis. If so a per-axis counter is incremented. If not the per-axis counter is cleared.

If any per-axis counter reaches a threshold value <t>, meaning there have been <t> successive 100Hz samples of acceleration more than <a> away from the long term average on that axis, a significant change is determined.

The values for <a> and <t> are configurable. Example values may be <a> = 2g and <t> = 3.

In embodiments where the orientation of the accelerometer data relative to the vehicle axes is known, the system can have per-axis values for <a> and <t>.

4) The measured Earth vector has flipped through approximately 180 degrees (measured compared to long term linear acceleration) at any point, indicating a vehicle roll.

5) $\Delta E_t$ is above a fourth threshold, lower than the first threshold and possibly the same as the second and/or third threshold, AND the direction of acceleration indicates a side-ways or end-on impact rather than vertical.

In embodiments where the orientation of the accelerometer data with respect to the vehicle is known, it can be determined that particular events are a collision by considering whether the direction of the observed acceleration vectors indicate normal driving as opposed to an impact with an obstacle or other vehicle, for example impacts due to driving on rough surfaces.

One example is to differentiate between hitting a pot-hole, cattle-grid or driving along a cobbled street (where the principal axis of acceleration is vertical and backwards at the same time; the impacts may have a backward component because the obstacle is an obstruction in the direction of movement) compared to collisions with another vehicle or obstacle (where principal axis of acceleration is horizontal from the side, front or back). This allows a further embodiment using a combination of factors to determine a collision. For example a collision is detected.

It has been identified that the energy change methodology discussed above is less effective when the rate at which acceleration data is collected is relatively low. In that case, it has been found that collision detection accuracy is improved by filtering the acceleration data to include only samples with a magnitude greater than a threshold. Embodiments which use this approach will now be described. In general these embodiments use one or more of:

- Counting a number of samples which are above a threshold (either an absolute or a relative threshold) in a time period. Counting samples above a threshold will detect relatively small increases above the threshold and can indicate a low-speed collision; and
- Summing the absolute value of samples which are above a threshold (either an absolute or a relative threshold, and it may be the same or different from the threshold to determine samples to count if counting is also used) in a time period. Summing can give an indication of the strength of the impact.

The time period may be chosen depending on the number of samples available and may, for example, be 0.5s, 1s, 2s or any other suitable value.

Relative thresholds vary with the signal represented by the samples. A relative threshold may, for example, track the signal and reduce the impact of noise in the signal. When relative thresholds are used, they can be calculated as follows:

The first step in the calculation of relative thresholds is to filter the samples to establish a local mean acceleration. A moving-average filter is used for this:

$$m(k) = \frac{1}{N+1} \sum_{n=-\frac{N}{2}}^{+\frac{N}{2}} a(k+n) \qquad (9)$$

Where $a(k)$ are the acceleration samples and $N$ is an even integer. The value of $N$ in conjunction with the sampling rate determines the length of time the moving average is calculated over. In an example, $N$ is chosen so that the averaging interval spans 240 ms. 240 ms is chosen in this example because it is the smallest interval that holds an even number of samples at a number of predetermined sampling rates. Experimentation has shown that an averaging interval of 240 ms allows the mean to track driver-controlled changes and at the same time suppress noise. Other averaging intervals can also be used and the embodiments are not limited to this time period.

In the calculation of the moving average using equation (9), the sample components (along the three axes) from the accelerometer are treated as independent sample streams.

Next, the local means are subtracted from the samples to estimate the noise contribution to the sample:

$$n(k) = a(k) - m(k) \qquad (10)$$

An event is detected to start the analysis to determine whether a collision has occurred when the sample data from the accelerometer exceeds a threshold (this may be the vector magnitude, or magnitude of one or more components, for example). This detected even is assigned a time of t=0 in the following discussion. An estimate of the RMS noise level, r, is used with the local mean as the basis of a local threshold, $t(k)$, that responds to changing noise conditions:

$$t(k) = m(k) \pm Ar \qquad (11)$$

where r is calculated by taking the RMS value of the noise values for a period preceding t=0. It is not necessarily the case that the detection at t=0 was actually the start of the collision. For example acceleration data just before t=0 may have been data relating to the collision. The immediately preceding acceleration data is therefore not used in the calculation of $r$. For example the RMS noise can be calculated on the negative time samples available up to a time t=-0.25s or t=-0.5s.

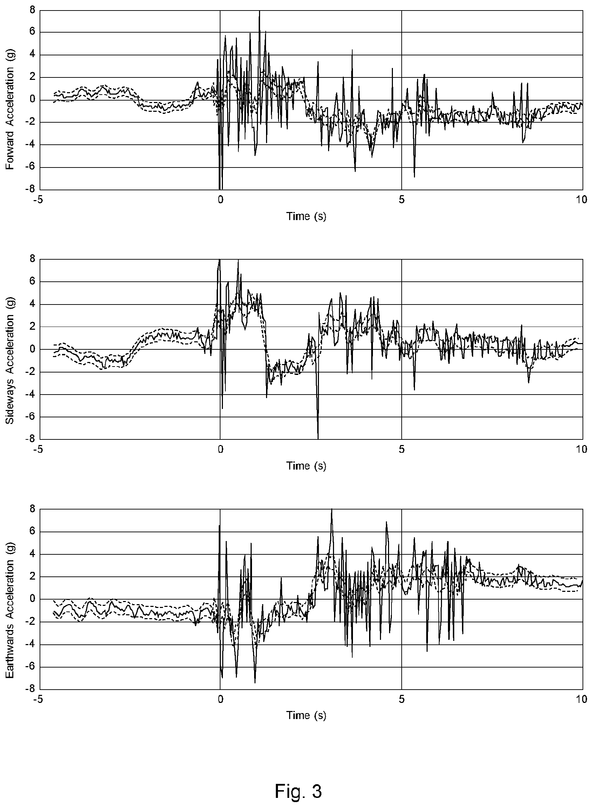

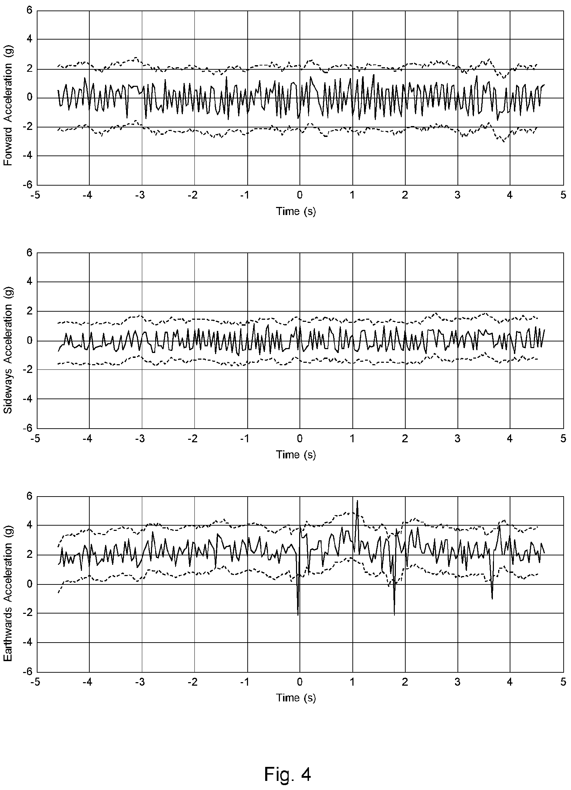

$A$ in equation (11) above is an appropriate factor. For example, $A$ can be determined to allow discrimination between real collisions and false positives using data collected in the field. Figures 3 and 4 show example data for a true collision (Figure 3) and a false positive (Figure 4). The data is represented by a solid line and the dotted lines show the thresholds that would apply with A = 3. This demonstrates how the threshold tracks the manoeuvring in Figure 3, but not the impacts. In Figures 3 and 4 the accelerations are shown with the axes labelled "earthwards", "sideways" and "forward". These three axes are orthogonal and they do not have to be oriented relative to the vehicle for which acceleration is being measured.

The tables below demonstrate the effect of changing the value of $A$ on the results of the count and sum for the data depicted in Figures 3 and 4:

Table 1, Number of samples exceeding the relative threshold for the impact shown in Figure 4 (Earthward Axis)

| Interval | Factor (A) | | | | |
|----------|------|------|------|------|------|
| (s) | 1 | 2 | 3 | 4 | 5 |
| -0.5 to +0.5 | 11.0 | 6.0 | 3.0 | 1.0 | 1.0 |
| +0.5 to +1.5 | 9.0 | 2.0 | 1.0 | 1.0 | 0.0 |
| +1.5 to +2.5 | 12.0 | 6.0 | 2.0 | 1.0 | 1.0 |
| +2.5 to +3.5 | 10.0 | 2.0 | 0.0 | 0.0 | 0.0 |
| +3.5 to +4.5 | 12.0 | 4.0 | 1.0 | 1.0 | 1.0 |

Table 2, Number of samples exceeding the relative threshold for the impact shown in Figure 3 (Earthward Axis)

| Interval | Factor (A) | | | | |
|---|---|---|---|---|---|
| (s) | 1 | 2 | 3 | 4 | 5 |
| -0.5 to +0.5 | 21.0 | 16.0 | 13.0 | 12.0 | 11.0 |
| +0.5 to +1.5 | 21.0 | 21.0 | 16.0 | 16.0 | 16.0 |
| +1.5 to +2.5 | 16.0 | 12.0 | 8.0 | 6.0 | 6.0 |
| +2.5 to +3.5 | 25.0 | 23.0 | 22.0 | 20.0 | 17.0 |
| +3.5 to +4.5 | 23.0 | 22.0 | 21.0 | 21.0 | 20.0 |
| +4.5 to +5.5 | 24.0 | 19.0 | 16.0 | 13.0 | 13.0 |
| +5.5 to +6.5 | 24.0 | 21.0 | 18.0 | 18.0 | 17.0 |
| +6.5 to +7.5 | 17.0 | 11.0 | 10.0 | 8.0 | 7.0 |
| +7.5 to +8.5 | 16.0 | 7.0 | 2.0 | 2.0 | 0.0 |
| +8.5 to +9.5 | 10.0 | 5.0 | 1.0 | 1.0 | 0.0 |

Table 3, Sum of the absolute values of the samples exceeding the relative threshold for the impact shown in Figure 4 (Earthward Axis)

| Interval | Factor (A) | | | | |
|---|---|---|---|---|---|
| (s) | 1 | 2 | 3 | 4 | 5 |
| -0.5 to +0.5 | 14.7 | 11.2 | 7.8 | 4.3 | 4.3 |
| +0.5 to +1.5 | 9.3 | 3.7 | 2.6 | 2.6 | 0.0 |
| +1.5 to +2.5 | 16.6 | 11.5 | 5.9 | 3.9 | 3.9 |
| +2.5 to +3.5 | 8.4 | 2.2 | 0.0 | 0.0 | 0.0 |
| +3.5 to +4.5 | 12.6 | 6.7 | 3.0 | 3.0 | 3.0 |

Table 4, Sum of the absolute values of the samples exceeding the relative threshold for the impact shown in Figure 3 (Earthward Axis)

| Interval | Factor (A) | | | | |
|---|---|---|---|---|---|
| (s) | 1 | 2 | 3 | 4 | 5 |
| -0.5 to +0.5 | 41.8 | 40.5 | 39.1 | 38.4 | 37.5 |
| +0.5 to +1.5 | 43.0 | 43.0 | 40.5 | 40.5 | 40.5 |
| +1.5 to +2.5 | 13.4 | 12.2 | 10.2 | 8.9 | 8.9 |
| +2.5 to +3.5 | 52.2 | 51.7 | 51.3 | 49.9 | 47.2 |
| +3.5 to +4.5 | 54.0 | 53.7 | 53.2 | 53.2 | 52.4 |
| +4.5 to +5.5 | 39.4 | 38.1 | 36.4 | 34.3 | 34.3 |
| +5.5 to +6.5 | 55.2 | 54.2 | 52.8 | 52.8 | 51.9 |
| +6.5 to +7.5 | 17.7 | 16.1 | 15.6 | 14.2 | 13.4 |
| +7.5 to +8.5 | 7.0 | 4.4 | 1.8 | 1.8 | 0.0 |
| +8.5 to +9.5 | 4.1 | 2.7 | 0.8 | 0.8 | 0.0 |

Absolute thresholds are also useful both alone and in combination with relative thresholds. An absolute threshold does not vary with the acceleration data in the way that the relative thresholds described above do. Absolute thresholds may be expressed as a multiple of the acceleration due to gravity at the Earth's surface, g. For example the absolute threshold may be 3g, 4g, 5g, 6g, 7g or any other suitable value. The tables below give the results of the data depicted in Figures 3 and 4 with various values of absolute threshold.

Table 5, Number of samples exceeding the absolute thresholds for the impact shown in Figure 4 Earthward Axis)

| Interval | Threshold | | | | |
|---|---|---|---|---|---|
| (s) | 3 g | 4 g | 5 g | 6 g | 7 g |
| -0.5 to +0.5 | 4.0 | 0.0 | 0.0 | 0.0 | 0.0 |
| +0.5 to +1.5 | 8.0 | 1.0 | 1.0 | 0.0 | 0.0 |
| +1.5 to +2.5 | 6.0 | 0.0 | 0.0 | 0.0 | 0.0 |
| +2.5 to +3.5 | 4.0 | 0.0 | 0.0 | 0.0 | 0.0 |
| +3.5 to +4.5 | 3.0 | 0.0 | 0.0 | 0.0 | 0.0 |

Table 6, Number of samples exceeding the absolute thresholds for the impact shown in Figure 3 (Earthward Axis)

| Interval | Threshold | | | | |
|---|---|---|---|---|---|
| (s) | 3 g | 4 g | 5 g | 6 g | 7 g |
| -0.5 to +0.5 | 9.0 | 6.0 | 6.0 | 3.0 | 0.0 |
| +0.5 to +1.5 | 9.0 | 3.0 | 2.0 | 1.0 | 1.0 |
| +1.5 to +2.5 | 0.0 | 0.0 | 0.0 | 0.0 | 0.0 |
| +2.5 to +3.5 | 12.0 | 7.0 | 4.0 | 1.0 | 1.0 |
| +3.5 to +4.5 | 8.0 | 4.0 | 1.0 | 0.0 | 0.0 |
| +4.5 to +5.5 | 8.0 | 4.0 | 3.0 | 1.0 | 0.0 |
| +5.5 to +6.5 | 13.0 | 8.0 | 2.0 | 0.0 | 0.0 |
| +6.5 to +7.5 | 6.0 | 0.0 | 0.0 | 0.0 | 0.0 |
| +7.5 to +8.5 | 1.0 | 0.0 | 0.0 | 0.0 | 0.0 |
| +8.5 to +9.5 | 0.0 | 0.0 | 0.0 | 0.0 | 0.0 |

Table 7, Sum of the absolute values of the samples exceeding the absolute thresholds for the impact shown in Figure 4 Earthward Axis)

| Interval | Threshold | | | | |
|---|---|---|---|---|---|
| (s) | 3 g | 4 g | 5 g | 6 g | 7 g |
| -0.5 to +0.5 | 13.6 | 0.0 | 0.0 | 0.0 | 0.0 |
| +0.5 to +1.5 | 29.8 | 5.7 | 5.7 | 0.0 | 0.0 |
| +1.5 to +2.5 | 20.9 | 0.0 | 0.0 | 0.0 | 0.0 |
| +2.5 to +3.5 | 12.2 | 0.0 | 0.0 | 0.0 | 0.0 |
| +3.5 to +4.5 | 10.3 | 0.0 | 0.0 | 0.0 | 0.0 |

Table 8, Sum of the absolute values of the samples exceeding the absolute thresholds for the impact shown in Figure 3 (Earthward Axis)

| Interval | Threshold | | | | |
|---|---|---|---|---|---|
| (s) | 3 g | 4 g | 5 g | 6 g | 7 g |
| -0.5 to +0.5 | 46.6 | 36.5 | 36.5 | 20.3 | 0.0 |
| +0.5 to +1.5 | 38.8 | 17.6 | 12.7 | 7.5 | 7.5 |
| +1.5 to +2.5 | 0.0 | 0.0 | 0.0 | 0.0 | 0.0 |
| +2.5 to +3.5 | 54.6 | 37.4 | 24.2 | 8.0 | 8.0 |
| +3.5 to +4.5 | 32.3 | 18.1 | 5.1 | 0.0 | 0.0 |
| +4.5 to +5.5 | 35.1 | 22.1 | 17.3 | 6.8 | 0.0 |
| +5.5 to +6.5 | 53.4 | 36.1 | 10.2 | 0.0 | 0.0 |
| +6.5 to +7.5 | 20.5 | 0.0 | 0.0 | 0.0 | 0.0 |
| +7.5 to +8.5 | 3.1 | 0.0 | 0.0 | 0.0 | 0.0 |
| +8.5 to +9.5 | 0.0 | 0.0 | 0.0 | 0.0 | 0.0 |

The counting and/or summing metrics, whether used in conjunction with a relative threshold or an absolute threshold, are computationally simple, enabling them to be implemented with relatively little processing power. An embodiment will now be described which combines a count using a relative threshold with a sum using an absolute threshold.

Firstly, the number of samples exceeding a relative threshold in the 1 s interval about the impact event is determined. The impact event is in the centre of the interval so the time spans -0.5s to +0.5s with the impact at t=0. The three components of each acceleration data sample are processed independently and their counts are summed, so it is possible for each data sample to increase the count by between 0 and 3. For acceleration data that has a sampling rate of 25Hz it has been found that using A=5 to calculate the relative threshold works well (see tables 1 and 2 above, A=5 gives low counts from the false positive of Figure 4 and high counts from the real collision of Figure 3). This count is used to give weight to low-energy collisions where the acceleration values may not be high, but where a large number of samples stand out as being unusual (given the statistics in the interval leading up to the event).

Secondly, the absolute values of the samples exceeding an absolute threshold in the same 1 s interval about the impact event is determined. The three components of each acceleration sample are processed independently and their individual sums are added together. For acceleration data having a sampling rate of 25Hz, it has been found that an absolute threshold of 6 g works well (see tables 7 and 8 above). This sum calculation gives weight to stronger impulses which are more likely to occur in a collision than under normal driving conditions.

Thirdly, the count and sum are added to create a metric that can be compared to a collision threshold to determine whether a collision has taken place. The choice collision threshold value is dependent on several variables, including the vehicle characteristics, the accelerometer sampling rate and the absolute and relative thresholds, it can be determined by experimentation, for example. Experimentation with data of collisions and false positives suggest that with a sampling rate of 25 Hz, a relative threshold for the count of A=5 and an absolute threshold for the sum of 6g, a collision threshold of around 20 indicates the majority of collisions with relatively few false positives.

In other embodiments accelerometer data can be processed to determine the relative orientation, after a collision event as a further indicator of a collision and its severity. A relative orientation which differs indicates that a vehicle may have rolled. Relative orientation can be calculated using the dot product of a direction vector with a reference vector.

The reference vector, r, can be calculated from the data before the collision (if available), for example the mean of the ls block from t=-1.5 to t=-0.5. Alternatively, if the accelerometer is oriented with respect to the vehicle a reference vector can be assumed with knowledge of the orientation, for example {0, 0, 1} in the reference frame of the vehicle.

Once the reference vector, r, is determined, direction vectors, $d_k$ can be calculated by taking the mean of blocks of samples corresponding to other time periods of 1 second.

The relative angle $\Phi(k)$ can then be calculated by:

$$\phi(k) = \cos^{-1}(\boldsymbol{r} \cdot \boldsymbol{d_k}) \qquad (12)$$

Table 9 below gives the relative angle calculated using this method for the data in Figures 3 and 4; it shows how the relative angle for the real collision of Figure 3 is significantly higher in this case than non-collision data gathered from a motorbike.

Table 9 - Relative angles for the data in Figures 3 and 4.

| Interval (s) | Relative Angle (deg) Fig. 3 | Relative Angle (deg) Fig. 4 |
|---|---|---|
| -4.5 to -3.5 | 30.0 | 4.5 |
| -3.5 to -2.5 | 54.8 | 4.4 |
| -2.5 to -1.5 | 35.5 | 4.8 |
| -1.5 to -0.5 | 37.2 | 0.3 |
| -0.5 to +0.5 | 47.5 | 2.0 |
| +0.5 to +1.5 | 50.1 | 1.8 |
| +1.5 to +2.5 | 58.7 | 0.7 |
| +2.5 to +3.5 | 135.2 | 6.3 |
| +3.5 to +4.5 | 104.0 | 5.5 |
| +4.5 to +5.5 | 147.4 | No data |
| +5.5 to +6.5 | 143.2 | No data |
| +6.5 to +7.5 | 145.2 | No data |
| +7.5 to +8.5 | 148.1 | No data |
| +8.5 to +9.5 | 153.2 | No data |

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

**Claims**

1.   A method of detecting a collision using an accelerometer (8) attached to a vehicle; the method comprising:

receiving acceleration data from the accelerometer at discrete intervals;
summing (106) the acceleration data over a time period to produce an accumulated acceleration;
determining (108) whether a collision has occurred based at least in part on a comparison of at least one of the accumulated acceleration and a function of the accumulated acceleration to a first threshold; and **characterised by**:

counting the number of points of acceleration data within the time period which exceed a second threshold to produce a count, and wherein
the determining whether a collision has occurred is further based at least in part on the count.

2. A method according to claim 1, wherein the first threshold is determined by considering an energy change over the time period likely to cause injury to a vehicle occupant or damage to the vehicle.

3. A method according to claim 1, wherein the accelerometer is attached within a passenger compartment of the vehicle and the threshold is determined by considering an energy change over the time period likely to cause injury to a vehicle occupant.

4. A method according to claim 2 or 3, wherein the first threshold uses the square root of an energy change over the time period likely to cause injury to a vehicle occupant or damage to the vehicle.

5. A method according to any one of claims 1 to 4, wherein the acceleration data is a vector in two or more axes and the summing the acceleration data uses either a magnitude of the vector or the acceleration along one of the two or more axes.

6. A method according to any one of claims 1 to 6, comprising amending the received acceleration data by subtracting an average of the acceleration data, wherein the summing uses the amended acceleration data, wherein preferably the average of the measured acceleration is calculated over a time of between 2 and 60 seconds preceding the acceleration data.

7. A method according to any one of claims 1 to 6, comprising:

summing the acceleration data over a second time period to produce a second accumulated acceleration, the second time period at least partially overlapping with the time period; and
wherein the determining whether a collision has occurred is further based at least in part on a comparison of the second accumulated acceleration with the first threshold.

8. A method according to any one of claims 1 to 7, wherein the determining whether a collision has occurred is based at least in part on a determination whether the vehicle is stationary having previously been in motion.

9. A method according to any one of claims 1 to 8, wherein the determining whether a collision has occurred is based at least in part on a change in static linear acceleration relative to an average static linear acceleration.

10. A method according to any one of claims 1 to 9, wherein the determining whether a collision has occurred is based at least in part on determining a measured Earth vector and comparing the measured Earth vector to a previously determined Earth vector.

11. A method according to any one of claims 1 to 10, wherein the determining whether a collision has occurred is based at least in part on a determination of the direction of the measured acceleration relative to a frame of reference of the vehicle.

12. A method according to any one of claims 1 to 11, wherein in the summing the acceleration data, only acceleration data which exceeds a third threshold is used.

13. An apparatus for attachment to a vehicle, the apparatus comprising:

a processing system (4) configured to execute the method of any one of claims 1 to 12.

14. A vehicle having an apparatus according to claim 13 attached to it.

15. A computer program comprising instructions such that when the computer program is executed on a computing device, the computing device is arranged to detect a collision using an accelerometer attached to a vehicle according to the method of any one of claims 1 to 12.

**Patentansprüche**

1.  Verfahren zum Detektieren einer Kollision unter Verwendung eines Beschleunigungsmessers (8), der an einem Fahrzeug angebracht ist, wobei das Verfahren umfasst:

    Empfangen von Beschleunigungsdaten vom Beschleunigungsmesser in diskreten Intervallen;
    Summieren (106) der Beschleunigungsdaten über einen Zeitraum, um eine akkumulierte Beschleunigung zu erzeugen;
    Bestimmen (108), ob eine Kollision stattgefunden hat, basierend zumindest teilweise auf einem Vergleich mindestens einer akkumulierten Beschleunigung und einer Funktion der akkumulierten Beschleunigung mit einem ersten Schwellenwert; und **gekennzeichnet durch**:

    Zählen der Anzahl von Punkten der Beschleunigungsdaten innerhalb des Zeitraums, die einen zweiten Schwellenwert überschreiten, um eine Zählung zu erzeugen, und wobei
    das Bestimmen, ob eine Kollision stattgefunden hat, ferner zumindest teilweise auf der Zählung basiert.

2.  Verfahren nach Anspruch 1, wobei der erste Schwellenwert bestimmt wird, indem eine Energieänderung über den Zeitraum berücksichtigt wird, die voraussichtlich eine Verletzung von Fahrzeuginsassen oder Schäden am Fahrzeug verursacht.

3.  Verfahren nach Anspruch 1, wobei der Beschleunigungsmesser in einem Fahrgastraum des Fahrzeugs angebracht ist und der Schwellenwert durch Berücksichtigung einer Energieänderung über den Zeitraum bestimmt wird, die voraussichtlich eine Verletzung eines Fahrzeuginsassen verursacht.

4.  Verfahren nach Anspruch 2 oder 3, wobei der erste Schwellenwert die Quadratwurzel einer Energieänderung über den Zeitraum verwendet, die voraussichtlich eine Verletzung eines Fahrzeuginsassen oder Beschädigung des Fahrzeugs verursacht.

5.  Verfahren nach einem der Ansprüche 1 bis 4, wobei die Beschleunigungsdaten einem Vektor in zwei oder mehreren Achsen entsprechen und das Summieren der Beschleunigungsdaten entweder eine Größe des Vektors oder der Beschleunigung entlang einer der zwei oder mehreren Achsen verwendet.

6.  Verfahren nach einem Ansprüche 1 bis 6, umfassend das Ändern der empfangenen Beschleunigungsdaten durch Subtrahieren eines Mittelwerts der Beschleunigungsdaten, wobei das Summieren die geänderten Beschleunigungsdaten verwendet, wobei vorzugsweise der Mittelwert der gemessenen Beschleunigung über eine Zeit zwischen 2 und 60 Sekunden vor den Beschleunigungsdaten berechnet wird.

7.  Verfahren nach einem der Ansprüche 1 bis 6, umfassend:

    Summieren der Beschleunigungsdaten über einen zweiten Zeitraum, um eine zweite akkumulierte Beschleunigung zu erzeugen, wobei der zweite Zeitraum zumindest teilweise mit dem ersten Zeitraum überlappt; und wobei das Bestimmen, ob eine Kollision stattgefunden hat, ferner zumindest teilweise auf einem Vergleich der zweiten akkumulierten Beschleunigung mit dem ersten Schwellenwert basiert.

8.  Verfahren nach einem der Ansprüche 1 bis 7, wobei das Bestimmen, ob eine Kollision stattgefunden hat, zumindest teilweise auf einer Bestimmung, ob das Fahrzeug stationär ist und vorher in Bewegung war, basiert.

9.  Verfahren nach einem der Ansprüche 1 bis 8, wobei das Bestimmen, ob eine Kollision stattgefunden hat, zumindest teilweise auf einer Änderung der statischen linearen Beschleunigung relativ zu einer durchschnittlichen statischen linearen Beschleunigung basiert.

10. Verfahren nach einem der Ansprüche 1 bis 9, wobei das Bestimmen, ob eine Kollision stattgefunden hat, zumindest teilweise auf dem Bestimmen eines gemessenen Erdvektors und einem Vergleich des gemessenen Erdvektors mit einem vorher bestimmten Erdvektor basiert.

11. Verfahren nach einem der Ansprüche 1 bis 10, wobei das Bestimmen, ob eine Kollision stattgefunden hat, zumindest teilweise auf einer Bestimmung der Richtung der gemessenen Beschleunigung relativ zu einem Referenzrahmen des Fahrzeugs basiert.

**EP 2 991 861 B1**

**12.** Verfahren nach einem der Ansprüche 1 bis 11, wobei nur Beschleunigungsdaten, die einen dritten Schwellenwert überschreiten, bei dem Summieren der Beschleunigungsdaten verwendet werden.

**13.** Vorrichtung zum Anbringen an ein Fahrzeug, wobei die Vorrichtung umfasst:

ein Verarbeitungssystem (4), das eingerichtet ist, das Verfahren nach einem der Ansprüche 1 bis 12 auszuführen.

**14.** Fahrzeug umfassend eine Vorrichtung nach Anspruch 13, die daran angebracht ist.

**15.** Computerprogrammprodukt umfassend Instruktionen, sodass, wenn das Computerprogramm auf einem Computergerät ausgeführt wird, das Computergerät eingerichtet ist, eine Kollision unter Verwendung eines Beschleunigungsmessers, der an einem Fahrzeug angebracht ist, gemäß dem Verfahren nach einem der Ansprüche 1 bis 12 zu detektieren.

**Revendications**

**1.** Procédé de détection d'une collision en utilisant un accéléromètre (8) fixé à un véhicule ; le procédé comprenant le fait :

de recevoir des données d'accélération à partir de l'accéléromètre à des intervalles discrets ;
d'additionner (106) les données d'accélération sur une période de temps pour produire une accélération accumulée ;
de déterminer (108) si une collision est survenue sur la base d'au moins en partie d'une comparaison d'au moins l'une de l'accélération accumulée et d'une fonction de l'accélération accumulée avec un premier seuil ; et **caractérisé par** le fait :

de compter le nombre de points de données d'accélération dans la période de temps qui dépassent un deuxième seuil pour produire un total, et dans lequel
la détermination consistant à savoir si une collision est survenue est en outre basée au moins en partie sur le total.

**2.** Procédé selon la revendication 1, dans lequel le premier seuil est déterminé en prenant en considération un changement d'énergie au cours de la période de temps susceptible de causer des blessures à un occupant de véhicule ou des dommages au véhicule.

**3.** Procédé selon la revendication 1, dans lequel l'accéléromètre est fixé à l'intérieur d'un habitacle du véhicule et le seuil est déterminé en prenant en considération un changement d'énergie sur la période de temps susceptible de causer des blessures à un occupant de véhicule.

**4.** Procédé selon la revendication 2 ou 3, dans lequel le premier seuil utilise la racine carrée d'un changement d'énergie sur la période de temps susceptible de causer des blessures à un occupant de véhicule ou des dommages au véhicule.

**5.** Procédé selon l'une quelconque des revendications 1 à 4, dans lequel les données d'accélération représentent un vecteur sur deux axes ou plus et l'addition des données d'accélération utilise soit une amplitude du vecteur, soit l'accélération le long de l'un des deux axes ou plus.

**6.** Procédé selon l'une quelconque des revendications 1 à 6, comprenant la modification des données d'accélération reçues en soustrayant une moyenne des données d'accélération, où l'addition utilise les données d'accélération modifiées, où la moyenne de l'accélération mesurée est de préférence calculée sur une durée entre 2 et 60 secondes précédant les données d'accélération.

**7.** Procédé selon l'une quelconque des revendications 1 à 6, comprenant le fait :

d'additionner les données d'accélération sur une deuxième période de temps pour produire une deuxième accélération accumulée, la deuxième période de temps chevauchant au moins partiellement la période de temps ; et

dans lequel la détermination consistant à savoir si une collision est survenue est en outre basée au moins en partie sur une comparaison de la deuxième accélération accumulée avec le premier seuil.

8. Procédé selon l'une quelconque des revendications 1 à 7, dans lequel la détermination consistant à savoir si une collision est survenue est basée au moins en partie sur la détermination consistant à savoir si le véhicule est à l'arrêt après avoir été en mouvement.

9. Procédé selon l'une quelconque des revendications 1 à 8, dans lequel la détermination consistant à savoir si une collision est survenue est basée au moins en partie sur un changement de l'accélération linéaire statique par rapport à une accélération linéaire statique moyenne.

10. Procédé selon l'une quelconque des revendications 1 à 9, dans lequel la détermination consistant à savoir si une collision est survenue est basée au moins en partie sur la détermination d'un vecteur Terrestre mesuré et la comparaison du vecteur Terrestre mesuré avec un vecteur Terrestre précédemment déterminé.

11. Procédé selon l'une quelconque des revendications 1 à 10, dans lequel la détermination consistant à savoir si une collision est survenue est basée au moins en partie sur une détermination de la direction de l'accélération mesurée par rapport au système de référence du véhicule.

12. Procédé selon l'une quelconque des revendications 1 à 11, dans lequel, lors de l'addition des données d'accélération, seules les données d'accélération qui dépassent un troisième seuil sont utilisées.

13. Appareil destiné à être fixé à un véhicule, l'appareil comprenant :

    un système de traitement (4) configuré pour exécuter le procédé de l'une quelconque des revendications 1 à 12.

14. Véhicule ayant un appareil selon la revendication 13 qui lui est fixé.

15. Programme informatique comprend des instructions de sorte que, lorsque le programme informatique est exécuté sur un dispositif informatique, le dispositif informatique soit conçu pour détecter une collision en utilisant un accéléromètre fixé à un véhicule selon le procédé de l'une quelconque des revendications 1 à 12.

Fig. 1

100       Record Acceleration data

102       Correct for long term average acceleration

104       Transform acceleration data into vehicle axes

106       Sum acceleration over the time period

108       Accumulated acceleration >= Threshold?

No

Yes

110       Collision Detected

Fig. 2

Fig. 3

Fig. 4

**REFERENCES CITED IN THE DESCRIPTION**

**Patent documents cited in the description**

- US 5436838 A
- US 6790778 B1

- GB 2014051379 W

**Non-patent literature cited in the description**

- *Archives of Disease in Childhood,* 1997, vol. 76, 393-397